# EUROPÄISCHE PATENTSCHRIFT

(11) **EP 0 578 840 B1**
(45) Veröffentlichungstag und Bekanntmachung des Hinweises auf die Patenterteilung: **18.12.1996**
(21) Anmeldenummer: 92109759.8
(22) Anmeldetag: 10.06.1992
(51) Int. Cl.: B01J 37/02, B01J 35/06

(54) **Verfahren zur Herstellung eines Katalysators**
Process for preparing a catalyst
Procédé pour la préparation d'un catalyseur

(43) Veröffentlichungstag der Anmeldung: 19.01.1994
(73) Patentinhaber: SIEMENS AKTIENGESELLSCHAFT, 80333 München (DE)
(72) Erfinder: Stoephasius, Rainer, Dipl.-Ing., W-8621 Altenkunstadt (DE); Mathes, Wieland, Dipl.-Ing., W-8626 Michelau (DE); Neufert, Ronald, Dr., W-8620 Lichtenfels (DE); Schmelz, Helmut, Dr., W-8210 Prien (DE); Zürbig, Jürgen, Dr., W-8622 Burgkunstadt (DE)

(56) Entgegenhaltungen:
- EP-A- 0 246 413
- EP-A- 0 387 394
- DE-A- 2 450 664
- DE-A- 2 844 294
- US-A- 4 193 793

## Beschreibung

Die Erfindung bezieht sich auf ein Verfahren zur Herstellung eines Katalysators, insbesondere eines Plattenkatalysators, der einen metallischen Tragkörper, eine haftvermittelnde Zwischenschicht und eine auf der Zwischenschicht aufgebrachte katalytisch wirksame Schicht umfaßt, bei dem die Zwischenschicht durch Erhitzen des Tragkörpers in oxidierender Atmosphäre gebildet wird und anschließend die katalytisch wirksame Schicht auf die Zwischenschicht aufgebracht wird.

Ein solches Verfahren geht hervor aus der DE 28 44 294 A1 sowie der DE 24 50 664 A1. Die EP 0 246 413 A1 betrifft ein Verfahren zur Herstellung eines Katalysators, der einen metallischen Tragkörper, eine haftvermittelnde Zwischenschicht und eine auf der Zwischenschicht aufgebrachte katalytisch wirksame Schicht umfaßt, bei welchem Verfahren die Zwischenschicht in Form einer Keramikmasse durch Flamm- oder Plasmaspritzen aufgebracht wird.

Übliche Katalysatoren, wie sie beispielsweise zur Verminderung der Stickoxide in Rauchgas eingesetzt werden, bestehen meist aus einem metallischen Tragkörper, einer haftvermittelnden Zwischenschicht und einer auf der Zwischenschicht aufgebrachten katalytisch wirksamen Schicht. Grundsätzlich besteht bei der Herstellung von Katalysatoren das Problem, eine gute Haftung der katalytisch wirksamen Schicht auf dem metallischen Tragkörper einzustellen.

Insbesondere zur Herstellung von Plattenkatalysatoren sind zur Lösung des genannten Problems Verfahren bekannt, bei denen eine haftvermittelnde Zwischenschicht durch das Aufsprühen von flüssigem Aluminium (Flammspritzen von Aluminium) auf einen Streckmetall-Tragkörper hetgestellt wird (US 4,370,262; US 4,285,838; US 4,455,281). Bei der Herstellung eines Katalysators nach diesem Verfahren muß jedoch zur Verflüssigung des Aluminiums sehr viel Energie aufgewendet werden. Desweiteren ist flüssiges Aluminium, welches beim Aufsprühen durch die Hohlräume im Tragkörper hindurchfällt, nicht mehr direkt wiederverwendbar, da es dabei teilweise aufoxidiert. Beide genannten Umstände machen diese Verfahren daher relativ teuer.

Aus der EP 0 387 394 ist ferner ein Verfahren bekannt, bei dem der Tragkörper des Katalysators aus mehrlagigen Geweben und/oder aus Gestricken und/oder aus faserigem Material, durch Sintern hergestellt wird. Dieses Verfahren hat den Nachteil, daß Gewebe und Gestricke in ihrer Herstellung aufwendig und teuer sind, faserige Materialien nur relativ schlecht definiert herstellbar sind.

Der Erfindung liegt die Aufgabe zugrunde, ein Verfahren zur Herstellung eines Katalysators der eingangs genannten Art anzugeben, mit dem der Katalysator, insbesondere in Form eines Plattenkatalysators, preiswert herzustellen ist und bei dem gleichzeitig eine gute Haftung der katalytisch wirksamen Schicht auf dem metallischen Tragkörper erreicht wird.

Zur Lösung dieser Aufgabe angegeben wird ein Verfahren zur Herstellung eines Katalysators, insbesondere eines Plattenkatalysators, der einen metallischen Tragkörper, eine haftvermittelnde Zwischenschicht und eine auf der Zwischenschicht aufgebrachte katalytisch wirksame Schicht umfaßt, bei dem die Zwischenschicht durch Erhitzen des Tragkörpers in oxidierender Atmosphäre gebildet wird und anschließend die kataytisch wirksame Schicht auf die Zwischenschicht aufgebracht wird, wobei auf den Tragkörper vor dem Erhitzen eine Ölschicht aufgebracht und zusammen mit dem Tragkörper erhitzt wird.

Bei der Erhitzung wird die Oberfläche des Tragkörpers aufoxidiert und bekommt eine Rauhigkeit und Porosität, welche die Haftung der katalytisch wirksamen Schicht auf dem Tragkörper begünstigen. Auf eine derart hergestellte haftvermittelnde Zwischenschicht kann das katalytisch aktive Material beispielsweise als pästöse Masse durch Aufwalzen aufgebracht und anschließend kalziniert werden.

Zur Beschleunigung und Homogenisierung des Oxidationsvorgangs an der Oberfläche des metallischen Tragkörpers wird vor dem Erhitzen eine Ölschicht auf den Tragkörper aufgebracht. Vorzugsweise kann dabei beispielsweise das auf das Streckmetall für den Streckvorgang aufgebrachte Schneidöl auf dem Tragkörper belassen bleiben. Das Schneidöl, obwohl selbst ein Reduktionsmittel, führt beim Oxidieren zu einem zusätzlichen, punktuellen Wärmeeintrag auf der Oberfläche des Tragkörpers und daher bei ausreichender Oxidationsmittelzufuhr zu einer Verstärkung der Oxidschicht.

In vorteilhafter Weiterbildung der Erfindung kann nach dem Aufbringen der Ölschicht und vor dem Erhitzen ein Gemenge von an der Ölschicht haftenden Partikeln auf den Tragkörper aufgebracht werden. Hierdurch bildet sich auf dem Tragkörper eine zum Teil oxidierte und relativ stark aufgerauhte Schicht, deren Hafteigenschaften bezüglich des katalytischen Materials durch eine geeignete Wahl der Partikel an dieses angepaßt werden kann. Unter einem Gemenge von Partikeln sind hierbei Metall- und/oder Glas- und/oder Keramikpartikel zu verstehen, insbesondere Partikel aus Silber-Zinn-Oxid AgSnO₂ und aus dem Werkstoff X₅CrNi_{18,9} (Werkstoff-Nr. 1.4306).

Alternativ kann das Gemenge von Partikeln in Ausgestaltung der Erfindung in Öl aufgeschlämmt und mit diesem vor dem Erhitzen als Suspension auf den Tragkörper aufgebracht werden. Diese Vorgehensweise führt zu den selben bereits o. g. Vorteilen. Diese Vorteile treffen ebenso auf eine weitere alternative Vorgehensweise zur Aufbringung der Partikel auf den Tragkörper zu, bei der ein Gemenge von ölgetränkten Partikeln vor dem Sintern als pastöse Masse auf den Tragkörper kalandriert wird.

Zur weiteren Beschleunigung der Oxidation der Oberfläche des Tragkörpers ist es sinnvoll, wenn ein Öl mit einem Chlorgehalt von mindestens 1 % verwendet wird. Hierdurch werden an der Oberfläche des Tragkörpers neben Sauerstoffverbindungen des Tragkörpermaterials auch Chlorverbindungen des Tragkörpermaterials gebildet. Diese tragen zur Erosion der Oberfläche des Tragkörpers und damit zur Verbesserung der Haftvermittlung der Zwischenschicht bei.

Wenn auf den Tragkörper keine Partikel aufgebracht worden sind, ist es vorteilhaft, wenn das Erhitzen bei einer Temperatur von 200 bis 600° C und über eine zeitliche Dauer von mindestens 5 Std. durchgeführt wird. Hierdurch wird eine homogene und sehr gut auf dem Tragkörper haftende Oxidschicht gebildet, die als haftvermittelnde Zwischenschicht für das katalytisch wirksame Material dient.

Wenn vor dem Erhitzen des Tragkörpers ein Gemenge von Partikeln auf diesen aufgebracht worden ist, ist es sinnvoll, das Erhitzen bei einer Temperatur von 700 bis 1000° C und über eine zeitliche Dauer von einigen Minuten durchzuführen. Hierdurch werden einerseits die aufgebrachten Partikel auf den Tragkörper aufgesintert, andererseits wird aber auch eine oxidierte Schicht an der Oberfläche des Tragkörpers gebildet, die bei dieser Vorgehensweise noch fest auf dem nicht oxidierten Material des Tragkörpers haftet.

Ausführungsbeispiele der Erfindung werden nachstehend näher erläutert:

Zur Herstellung eines Plattenkatalysators wird im Ausführungsbeispiel als Tragkörper ein Streckmetall aus nicht rostendem Stahl verwendet. Für den Streckvorgang wird auf den Tragkörper ein Schneidöl aufgebracht, das einen Chlorgehalt von 2 % hat. Es wird auf dem Streckmetall belassen.

Auf den mit Schneidöl benetzten Tragkörper werden im Ausführungsbeispiel relativ feine Partikel aus Silber-Zinn-Oxid AgSnO₂ aufgestäubt, die größtenteils adhäsiv an das Schneidöl auf der Oberfläche des Tragkörpers haften. Anschließend wird der Tragkörper, auf dem sich das Schneidöl und die daran haftenden Partikel befinden, auf eine Temperatur von 900° C über eine Dauer von 5 min. erhitzt. Dabei werden einerseits die auf dem Tragkörper befindlichen Partikel auf den Tragkörper aufgesintert. Andererseits bedingt das im Schneidöl enthaltene Chlor eine relativ starke Erosion der Oberfläche des Tragkörpers, auf der hierdurch bevorzugt Sauerstoff-, Chlor- und Chlor-Sauerstoff-Verbindungen des Tragkörpers gebildet werden. Beide Umstände zusammen führen sowohl zu einer makroskopischen als auch zu einer mikroskopischen Aufrauhung der Oberfläche des Tragkörpers. Hierdurch wird eine sehr gute Haftgrundlage für die noch aufzubringende katalytisch wirksame Schicht auf dem Tragkörper in Form einer haftvermittelnden Zwischenschicht geschaffen. Das katalytisch wirksame Material wird im Ausführungsbeispiel als pastöse Masse auf die Zwischenschicht aufgebracht. Der Katalysatorrohrling wird anschließend getrocknet und calciniert.

Alternativ wird in einem anderen Ausführungsbeispiel eine haftvermittelnde Zwischenschicht ohne das Aufsintern von Partikeln auf den metallischen Streckmetall-Tragkörper hergestellt. Hierbei wird das auf den Tragkörper aufgebrachte Schneidöl, welches einen Chlorgehalt von 2 % hat, auf dem Tragkörper belassen. Der Tragkörper wird in diesem Fall auf eine Temperatur von 450° C aufgeheizt und auf dieser Temperatur über eine Dauer von 5 Stunden gehalten.

Dabei bilden sich zunächst neben Sauerstoff- auch Chlor- und Sauerstoff-Chlor-Verbindungen des Tragkörpers, die aufgrund der relativ langen Haltezeit überwiegend in Sauerstoff-Verbindungen des Tragkörpers übergehen. Die auf diese Weise aufoxidierte Oberfläche des Tragkörpers bietet eine sehr gute Haftgrundlage für das katalytisch wirksame Material. Dieses wird als pastöse Masse auf den Tragkörper aufgebracht, getrocknet und anschließend durch Calcinieren auf dem Tragkörper verfestigt.

## Patentansprüche

1. Verfahren zur Herstellung eines Katalysators, insbesondere eines Plattenkatalysators, der einen metallischen Tragkörper, eine haftvermittelnde Zwischenschicht und eine auf der Zwischenschicht aufgebrachte katalytisch wirksame Schicht umfaßt, bei dem die Zwischenschicht durch Erhitzen des Tragkörpers in oxidierender Atmosphäre gebildet wird und anschließend die katalytisch wirksame Schicht auf die Zwischenschicht aufgebracht wird,
**dadurch gekennzeichnet**, daß auf den Tragkörper vor dem Erhitzen eine Ölschicht aufgebracht und zusammen mit dem Tragkörper erhitzt wird.

2. Verfahren nach Anspruch 1,
**dadurch gekennzeichnet**, daß zum Aufbringen der Ölschicht ein Öl mit einem Chlorgehalt von mindestens 1 % verwendet wird.

3. Verfahren nach Anspruch 1 oder 2,
**dadurch gekennzeichnet**, daß nach dem Aufbringen der Ölschicht und vor dem Erhitzen ein Gemenge von an der Ölschicht haftenden Partikeln auf den Tragkörper aufgebracht wird.

4. Verfahren nach Anspruch 1 oder 2, **dadurch gekennzeichnet**, daß ein Gemenge von Partikeln in Öl aufgeschlämmt und vor dem Erhitzen als Suspension auf den Tragkörper aufgebracht wird.

5. Verfahren nach Anspruch 1 oder 2, **dadurch gekennzeichnet**, daß vor dem Erhitzen ein Gemenge von ölgetränkten Partikeln als pastöse Masse auf den Tragkörper kalandriert wird.

6. Verfahren nach Anspruch 1 oder 2,
**dadurch gekennzeichnet**, daß das Erhitzen bei einer Temperatur von 200 bis 600° C durchgeführt wird.

7. Verfahren nach Anspruch 6,
**dadurch gekennzeichnet**, daß das Erhitzen über eine zeitliche Dauer von mindestens 5 Std. durchgeführt wird.

8. Verfahren nach einem der Ansprüche 3 bis 5,
**dadurch gekennzeichnet**, daß das Erhitzen bei einer Temperatur von 700 bis 1000° C durchgeführt wird.

9. Verfahren nach Anspruch 8,
**dadurch gekennzeichnet**, daß das Erhitzen über eine zeitliche Dauer von einigen Minuten durchgeführt wird.

## Claims

1. Method for producing a catalytic converter, in particular a plate-type catalytic converter, which comprises a metallic carrier body, an adhesion-producing intermediate layer and a catalytically active layer applied to the intermediate layer, where the intermediate layer is formed by heating the carrier body in an oxidizing atmosphere and subsequently the catalytically active layer is applied to the intermediate layer, characterized in that an oil film is applied to the carrier body before the heating and is heated together with the carrier body.

2. Method according to claim 1, characterized in that to apply the oil film an oil which has a chlorine content of at least 1% is used.

3. Method according to claim 1 or 2, characterized in that after the application of the oil film and before the heating a mechanical mixture of particles adhering to the oil film is applied to the carrier body.

4. Method according to claim 1 or 2, characterized in that a mechanical mixture of particles is reduced to slurry in oil and before the heating is applied as a suspension to the carrier body.

5. Method according to claim 1 or 2, characterized in that before the heating a mechanical mixture of oil-saturated particles is calendered as a paste-like substance on to the carrier body.

6. Method according to claim 1 or 2, characterized in that the heating is carried out at a temperature of 200 to 600°C.

7. Method according to claim 6, characterized in that the heating is carried out over a duration of at least 5 hours.

8. Method according to one of claims 3 to 5, characterized in that the heating is carried out at a temperature of 700 to 1000°C.

9. Method according to claim 8, characterized in that the heating is carried out over a period of a few minutes.

## Revendications

1. Procédé de fabrication d'un pot catalytique, notamment d'un pot catalytique à plaque, qui comporte un support métallique, une couche intermédiaire donnant de l'adhérence et une couche efficace du point de vue catalytique déposée sur la couche intermédiaire, dans lequel on forme la couche intermédiaire en chauffant le support en atmosphère oxydante et ensuite on dépose la couche efficace du point de vue catalytique sur la couche intermédiaire,
caractérisé en ce qu'il consiste à déposer sur le support avant le chauffage, une couche huileuse et à la chauffer conjointement avec le support.

2. Procédé suivant la revendication 1,
caractérisé en ce qu'il consiste à utiliser pour déposer la couche huileuse, une huile ayant une teneur en chlore d'au moins 1%.

3. Procédé suivant la revendication 1 ou 2,
caractérisé en ce qu'il consiste après le dépôt de la couche huileuse et avant le chauffage à déposer sur le support une certaine quantité de particules adhérant à la couche huileuse.

4. Procédé suivant la revendication 1 ou 2,
caractérisé en ce qu'il consiste à mettre en suspension dans l'huile une certaine quantité de particules et à la déposer sur le support avant le chauffage en tant que suspension.

5. Procédé suivant la revendication 1 ou 2,
caractérisé en ce qu'il consiste à calandrer sur le support avant le chauffage une certaine quantité de particules imprégnées d'huile sous forme de masse pâteuse.

6. Procédé suivant le revendication 1 ou 2,
caractérisé en ce qu'il consiste à effectuer le chauffage à une température de 200 à 600°C.

7. Procédé suivant la revendication 6,
caractérisé en ce qu'il consiste à effectuer le chauffage pendant une durée d'au moins 5 heures.

8. Procédé suivant l'une des revendications 3 à 5, caractérisé en ce qu'il consiste à effectuer le chauffage à une température de 700 à 1000°C.

9. Procédé suivant la revendication 8,
caractérisé en ce qu'il consiste à effectuer le chauffage pendant une durée de quelques minutes.
